# EUROPEAN PATENT APPLICATION

(11) **EP 4 411 397 A1**
(43) Date of publication of application: **07.08.2024**
(21) Application number: 23205830.5
(22) Date of filing: 25.10.2023
(51) Int. Cl.: G01R 31/317, G01R 31/3183

(54) **TECHNIQUES FOR INFIELD TESTING OF CRYPTOGRAPHIC CIRCUITRY**

(30) Priority: 06.02.2023 US 202318106244
(71) Applicant: INTEL Corporation, Santa Clara, CA 95054 (US)
(72) Inventor: Kandula, Rakesh, Bangalore (IN); Nève de Mévergnies, Michael, 56520 Guidel (FR)
(74) Representative: Goddar, Heinz J.

(57) **Abstract**

Examples include techniques for infield testing of cryptographic circuitry located on a die. The infield testing to include providing a pass or fail status of an infield test scan of the cryptographic circuitry based on comparing an output generated by the cryptographic circuitry during a test run to a signature. The output generated by the cryptographic circuitry is in response to an input generated by a linear-feedback shift register during the test run.

## Description

### TECHNICAL FIELD

Examples described herein are generally related to techniques for infield, periodic testing of cryptographic circuitry on a die that can be included in a multi-die system for repair and run-time survivability.

### BACKGROUND OF THE INVENTION

A system-on-a-chip or system-on-chip ("SoC") is a term often used to describe a device or system having a processor and associated circuitry (e.g., I/O circuitry, processing cores, power delivery circuitry, memory controller circuitry, memory circuitry, etc.) integrated on a single integrated circuit ("IC") die, chip or substrate. For example, a device, computing platform or computing system could have one or more processor cores and associated circuitry (e.g., I/O circuitry, power delivery circuitry, memory controller circuitry, memory circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets could be physically and electrically coupled together by a package structure including, for example, various packaging substrates, interposers, interconnect bridges and the like. Also, these disaggregated devices can be referred to as a system-on-a-package (SoP). An SoC or SoP, in some implementations, can also generally be referred to as a processor.

Cryptographic (crypto) circuitry that includes one or more crypto engines resident on an SoC or SoP can be configured to operate using various cryptographic algorithms to include cryptographic algorithms described in the Advanced Encryption Standard (AES) such as, but not limited to, AES-128 or AES-256, Secure Hash Algorithms (SHAs) such as, but not limited to, SHA-384 or SHA-512, Revest-Shamir-Adleman (RSA) algorithms, elliptic curve digital signature/elliptic curve Diffie-Hellman (EDCSA/ECDH) algorithms, extended Merkely signature scheme (XMSS) algorithms, or other post-quantum algorithms. Hardware crypto acceleration engines (herein after referred to as "crypto engines") are typically needed to meet strict data security requirements in SoCs or SoPs to be deployed, for example, in a server included in cloud computing infrastructure. Such a server and its respectively deployed SoCs or SoPs rarely go through power off and power on cycles. It could be years between power off/on cycles in some extreme cases. In such extreme cases, because of heavy workloads for crypto engines of SoCs or SoPs included in these types of servers (or because of aging), defects can manifest in the crypto engines. The manifested defects in the crypto engines can possibly compromise data security or insert errors/corruptions in the workflow (e.g. data wrongly encrypted due to a defect that could not be correctly decrypted later on, corrupting the data at rest).

### BRIEF DESCRIPTION OF THE DRAWINGS

**FIG. 1** illustrates an example system.
**FIG. 2** illustrates an example input/output die included in a system-on-a-chip.
**FIG. 3** illustrates example infield crypto testing circuitry.
**FIG. 4** illustrates an example first test setup.
**FIG. 5** illustrates an example second test setup.
**FIG. 6** illustrates an example table associated with the second test setup.
**FIG. 7** illustrates an example test scheme.
**FIG. 8** illustrates an example logic flow.

### DETAILED DESCRIPTION

In some examples SoCs or SoPs that include cryptographic (crypto) circuitry can be deployed in servers that are part of a data center that can be included, for example, in a cloud computing infrastructure. Relatively long time periods between power cycles for these types of servers could result in undetected defects occurring in crypto circuitry of the SoCs or SoPs included in these types of servers. The undetected defects can compromise data security, and/or integrity and/or availability of data. In some examples, to protect against or detect possible defects of crypto circuitry, some techniques include use of a single pattern running on crypto engines included in the crypto circuitry that runs responsive to a power on self-test (POST). The single pattern is assumed to cover/detect most defects. However, some test simulations for commonly used crypto engines (e.g., an AES-128 crypto engine) have shown that the single pattern used for these techniques only covers around 75% of the logic of a crypto engine used to encrypt/decrypt data. Thus, 25% of the logic is likely to not be screened using this single pattern and defects in 1/4th of a crypto engine's logic can go undetected. Such a relatively large portion not being screened for defects is a risk to sensitive data protected by the encryption/decryption of the sensitive data (e.g., data related to banking operations).

Another technique to scan for defects in crypto engines included in crypto circuitry is infield key on / key off scan testing. However, this type of infield testing is done only during power on/off cycles. As mentioned above, SoCs or SoPs in servers included in a cloud infrastructure may not be power cycled for long periods of time. Yet another technique is infield period scan testing for an entire SoC or SoP. This other technique does not have the granularity to scan at a partition level where crypto engines included in crypto circuitry of SoCs or SoPs typically exist. Also, infield periodic scan testing of an entire SoC or SoP requires an idle condition to complete the test and idle conditions for SoCs or SoPs in servers included in a cloud infrastructure can rarely be in an idle condition and thus periodic scanning would be difficult or not possible. Both the long periods between power cycles of a server including an SoC or SoP or long periods between idle conditions for the SoC or SoP could result in undetected defects manifesting in the crypto circuitry of the SoC or SoP. The undetected defects also cause a risk to sensitive data protected by encryption/decryption of sensitive data by a crypto engine included in the crypto circuitry. Unprotected or partially protected data, if leaked, could result in substantial loss to a business needing to protect sensitive data and potential financial liability to parties that make, use or sell SoCs or SoPs that include crypto circuitry for which defects can manifest over time and are not timely detected and/or repaired.

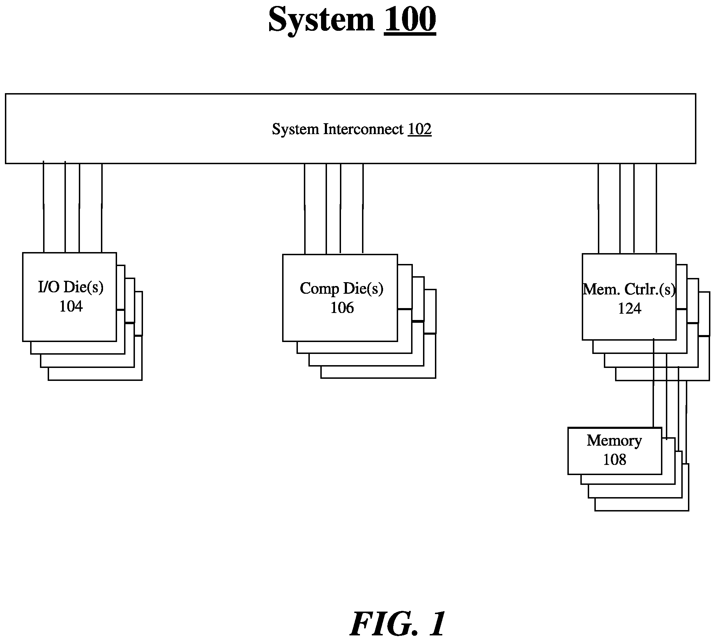

**FIG. 1** illustrates an example system 100. According to some examples, system 100 can be a multi-die SoC or SoP configured to function as a processor for a computing platform. The computing platform can be any type of computing platform, ranging from small portable devices such as smartphones, tablet computers and so forth to larger devices such as client systems, for example, desktop or workstation system, server system and so forth.

In some examples, as shown in FIG. 1, system 100 includes a system interconnect 102 through which agents resident on one or more input/output (I/O) die(s) 104 or one or more compute dies(s) 106 communicate to a memory 108 through one or more memory controller(s) 124 that may be included on the one or more compute die(s) 106 (e.g., as integrated memory controller) or located on one or more separate dies. System interconnect 102 can be configured as a network on a chip (NoC) fabric or other type of system communication channel fabric. In some examples, at least a portion of memory 108 can be included on a same SoC or SoP as I/O die(s) 104 and compute die(s) 106. In other examples, at least a portion of memory 108 can be coupled with an SoC or SoP that includes I/O dies(s) 104 and compute dies(s) 106. For example, included in or resident on one or more dual in-line memory modules (DIMMs) arranged to couple with system 100/ memory controller(s) 124 via one or more memory channels such as double data rate (DDR) memory channels, not shown in FIG. 1.

In some examples, compute dies(s) 106 can include a plurality of processing cores, associated caches or agents (e.g., coherency agents). The processing cores can be included in one or more commercially available processors, including without limitation an AMD^{®} Zen^{®} processor; an ARM^{®} processor; a Qualcomm^{®} Snapdragon^{®} processor; an Intel^{®} Atom^{®}, Core i3, Core i5, Core i7, Core i9, Xeon^{®} or Xeon Phi^{®} processor; SiFive^{®} RISC-V processors; or similar processors. The cores included in compute dies(s) 106 may be heterogeneous cores. For example, one of the cores included in compute dies(s) 106 can be a large processing engine designated to run foreground and/or high-performance applications. Another of the cores included in compute die(s) 106 may be a small computing engine designated to run low priority background processes. Additionally, another core included in compute dies(s) 106 can be on a low power domain of system 100 and configured to process low priority background processes.

According to some examples, I/O die(s) 104 can include, but are not limited to, I/O agents or I/O device controllers for various types of I/O devices that can be arranged to couple with system 100. The I/O devices, for example, can include graphics processing units (GPUs), various peripheral component interconnect express (PCIe) devices, a graphics card, an accelerator, a smart network interface controller (sNIC), or an infrastructure processing unit (IPU). In some examples, at least some of the above mentioned I/O devices can be included in a I/O die included in I/O die(s) 104. For example, a GPU and its associated I/O device controller may be located on a same I/O die included in I/O die(s) 104.

In some examples, memory 108 can include volatile and/or non-volatile types of memory. The volatile and/or non-volatile types of memory can be resident on one or more DIMMs. For these examples, the volatile and/or non-volatile memory included in memory 108 can be arranged to operate in compliance with a number of memory technologies described in various standards or specifications, such as DDR3 (DDR version 3), JESD79-3F, originally released by JEDEC (Joint Electronic Device Engineering Council) in July 2012, DDR4 (DDR version 4), JESD79-4C, originally published in January 2020, DDR5 (DDR version 5), JESD79-5B originally published in September 2022, LPDDR3 (Low Power DDR version 3), JESD209-3C, originally published in August 2015, LPDDR4 (LPDDR version 4), JESD209-4D, originally published by in June 2021, LPDDR5 (LPDDR version 5), JESD209-5B, originally published by in June 2021), WIO2 (Wide Input/output version 2), JESD229-2 originally published in August 2014, HBM (High Bandwidth Memory), JESD235, originally published in October 2013, HBM2 (HBM version 2), JESD235C, originally published in January 2020, or HBM3 (HBM version 3), JESD238, originally published in January 2022, or other memory technologies or combinations of memory technologies, as well as technologies based on derivatives or extensions of such above-mentioned specifications. The JEDEC standards or specifications are available at www.jedec.org.

Although not shown in FIG. 1, system 100 can include additional components that facilitate the operation of system 100. For example, internal memory devices, (e.g., I/O caches or buffers) various network and/or internal communication interfaces and associated interconnects can communicatively couple the elements shown in FIG. 1 to each other or to elements on devices capable of being connected or attached to system 100.

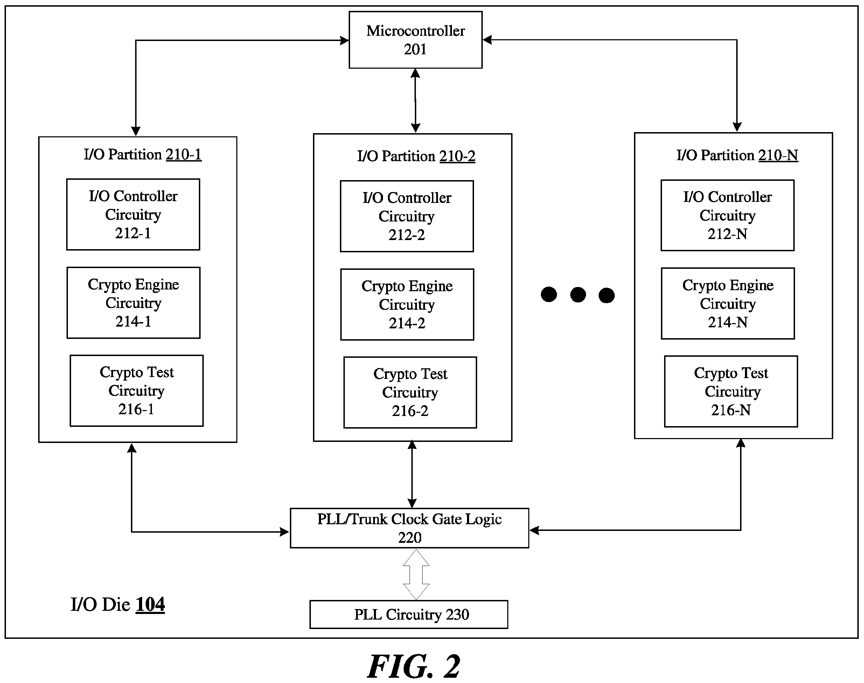

**FIG. 2** illustrates an example I/O die 104. In some examples, as shown in FIG. 2, I/O die 104 includes a microcontroller 201, a phase-locked loop (PLL)/trunk clock gate logic 220, PLL circuitry 230, and I/O partitions 210-1 to 210-N, where "N" is any whole, positive integer > 1. For these examples, each partition of I/O partitions 210-1 to 210-N can represent circuitry associated with I/O agents or controllers for I/O devices to couple with system 100. For example, I/O controller circuitry 212-1 included in I/O partition 210-1 can be associated with an Ethernet controller for an sNIC to couple with system 100, I/O controller circuitry 212-2 included in I/O partition 210-2 can be associated with a PCIe controller for a PCIe device to couple with system 100, or I/O controller circuitry 212-N included in I/O partition 210-N can be associated with an IPU controller for an IPU to couple with system 100.

According to some examples, crypto engine circuitry 214 included in each I/O partition 210 can be associated with I/O controller circuitry 212 and can include one or more crypto engines arranged or configured to operate using various cryptographic algorithms to include, but not limited to, AES-128, AES-256, SHA-384 or SHA-512. For these examples, the one or more crypto engines included in crypto engine circuitry 214 can encrypt or decrypt data sent to or received from I/O devices coupled with system 100. Encryption or decryption of data by the one or more crypto engines, for example, can serve to protect sensitive data as it passes to and from system 100.

In some examples, as shown in FIG. 2, I/O partitions 210-1 to 210-N separately include respective crypto test circuitry 216-1 to 216-N. As described in more detail below, crypto test circuitry 216 can be arranged to scan one or more crypto engines included in crypto engine circuitry 214 of an I/O partition 210 to cover substantially 100% of the logic used by the one or more crypto engines to encrypt/decrypt data. The scanning of the one or more crypto engines can detect defects and repair the detected defects of a crypto engine or replace a defective crypto engine with a redundant crypto engine. The scanning for defects, for example, can be opportunistic (e.g., during detected idle times) or can be spread out over a multitude of test runs.

According to some examples, microcontroller 201 can be arranged to initiate testing or scanning by crypto test circuitry 216-1 of one or more crypto engines of crypto engine circuitry 214 of a partition 210. Microcontroller 201 can be any kind of processor including a field programmable gate array (FPGA), CPU processor, application specific integrated circuity (ASIC) or an accelerator. Although microcontroller 201 is shown in FIG. 2 as being resident on I/O die 104, in other examples, microcontroller 201 may be located on a separate die coupled with I/O die 104 through system interconnect 102. Also, PLL trunk clock gate logic 220 and/or PLL circuitry 230 may also be located on a separate die coupled with I/O die 104 through system interconnect 102. For simplicity purposes microcontroller 201, PLL/trunk clock gate logic 220 and PLL circuitry 230 are shown in FIG. 2 as being on a same I/O die 104.

In some examples, microcontroller 201, I/O partitions 210-1 to 210-N, PLL/trunk clock gate logic 220, or PLL circuitry 230 can all be included in an FPGA or ASIC, accelerator, or processor circuitry or at least some of these components/circuitry may be included in separate FPGAs, ASICs, accelerators, or processor circuitry that reside on I/O die 104. For example, microcontroller 201 can be included in a first FPGA, partitions 210-1 to 210-N can be included in a second FPGA and PLL/trunk clock gate logic 220 and/or PLL circuitry 230 can be included in a third FPGA or included in either the first or second FPGAs.

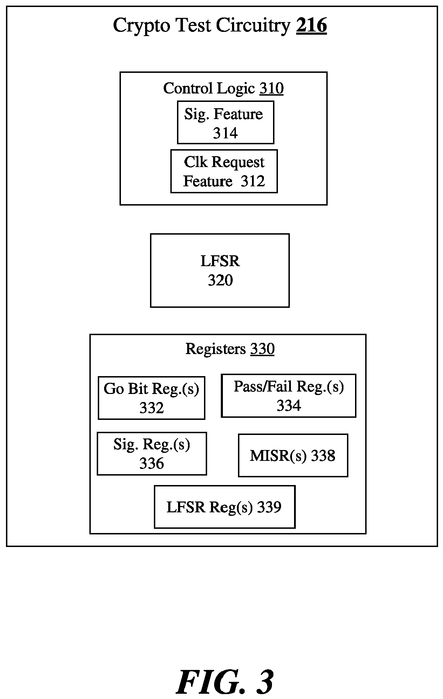

**FIG. 3** illustrates example crypto test circuitry 216. According to some examples, as shown in FIG. 3, crypto test circuitry 216 includes a control logic 310, a linear-feedback shift register (LFSR) 320 and registers 330. As described more below, a signature feature 314 and/or a clock request feature 312 of control logic 310 can be arranged in various test setups or test schemes to facilitate infield testing or scanning of one or more crypto engines included in crypto engine circuitry such as crypto engine circuitry 214 shown in FIG. 2 and mentioned above. Also, as described more below, various registers included in registers 330 such as go bit register(s) 332, pass/fail register(s) 334, signature register(s) 336, multiple input signature register(s) (MISR(s)) 338 or LFSR register(s) 339 can be used in these various test setups or test schemes to initiate and/or track scanning/testing results during or after infield testing.

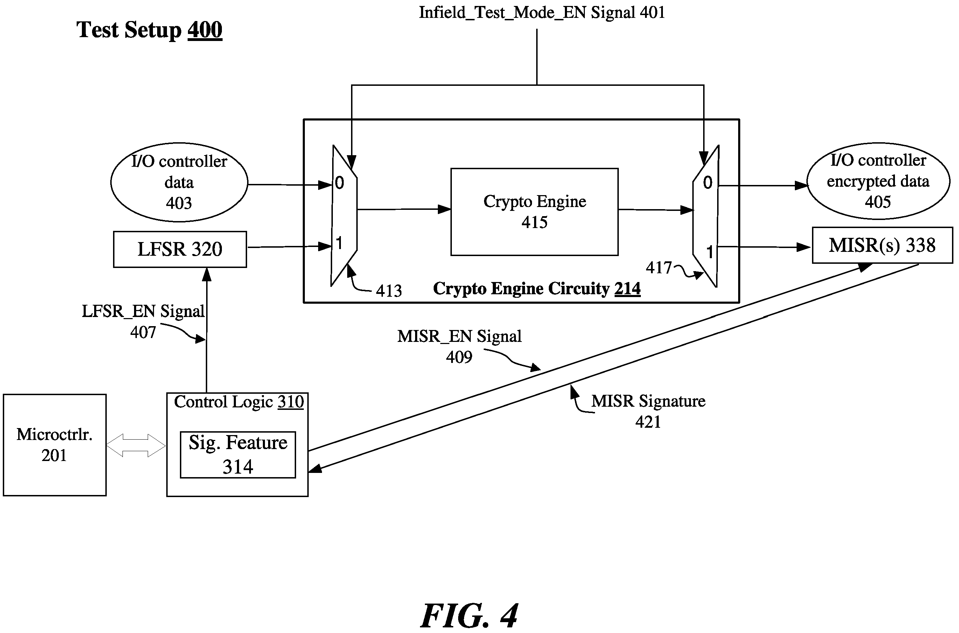

**FIG. 4** illustrates an example test setup 400. According to some examples, as shown in FIG. 4, test setup 400 can include testing or scanning a crypto engine 415 included in crypto engine circuitry 214. For these examples, as shown in FIG. 2 and briefly mentioned above, crypto engine circuitry 214 can be associated with I/O controller circuitry 212 of an I/O partition 210. I/O controller circuitry 212 can generate or receive data to be encrypted/decrypted by crypto engine 415.

According to some examples for use of crypto engine 415 for data encryption, when Infield_Test_Mode_EN signal 401 to multiplexor 413 and demultiplexor 417 is not asserted (indicated by 0 state), I/O controller data 403 is allowed to be inputted to crypto engine 415 and then to be outputted as I/O controller encrypted data 405. When Infield_Test_Mode_EN signal 401 to multiplexor 413 and demultiplexor 417 is asserted (indicated by 1 state), LFSR 320 is allowed to input a random pattern of data generated by LFSR 320 to crypto engine 415, the random pattern is encrypted by crypto engine 415 and then outputted to MISR(s) 338. Infield_Test_Mode_EN signal 401, for example, is not asserted during normal system operation of I/O partition 210.

In some examples, LFSR 320 can be arranged to start with a definite initial value (e.g., a seed value). The initial/seed value, for example, can be maintained in LFSR registers(s) 339 (shown in FIG. 3). Similarly, MISR(s) 338 can be arranged to start with a definite pre-determined value (e.g., a value of 0). For these examples, based on simulations that consider the design of crypto engine 415 to include, but not limited to, the number of wire/logic toggles utilized to encrypt data, a number of clock cycles needed to make LFSR 320 generate enough random data patterns to cause a 100% toggle of the wire/logic included in crypto engine 415 is determined. The patterns should exercise 100% of the circuitry associated with a data path of the crypto engine; some other logic (control, test, debug, etc..) may not be covered at 100%, as this other logic may not be involved in the normal operating mode of the crypto engine and, if a defect would develop in this portion, the engine might not need to be disabled). For example, if crypto engine 415 was arranged to use AES-128 algorithms, the number of wire/logic toggles would be less than if crypto engine 415 was arranged to use AES-256 algorithms. This is due to the AES-128 algorithm being an 128-bit encryption algorithm and the AES-256 algorithm being a 256-bit encryption algorithm that requires a greater number of wires/logic to encrypt/decrypt data. Hence, use of a 256-bit algorithm would require a crypto engine with a larger number of wire/logic toggles and therefore more clock cycles would be needed by LFSR 320 to generate enough random data patterns to cause a 100% toggle compared to use of an 128-bit encryption algorithm. A similar comparison could be made for SHA-384 and SHA-512 encryption algorithms. A signature output pattern from crypto engine 415 is also determined based on the determined number of cycles and the starting/seed value of LFSR 320 that generates inputs for crypto engine 415. The signature output pattern, in some examples, is called a golden signature. The golden signature, for examples, can be stored to signature register(s) 336 (see FIG. 3).

In some examples, microcontroller 201 can instruct control logic 310 to initiate an infield scan or test of crypto engine 415. For these examples, either microcontroller 201 or control logic 310 can cause Infield_Test_Mode_EN signal 401 to be asserted. Also, responsive to the instruction to initiate the infield scan, control logic 310 asserts LFSR_EN signal 407 to start LFSR 320 with an initial/seed value (e.g., pulled from LFSR Reg(s) 339) and also to assert MISR_EN signal 409 to cause MISR(s) 338 to store values or data outputted from crypto engine 415 during a test run. The Infield_Test-Mode_EN signal 401 remains asserted for the test run period. The test run, for example, can be based on the number of pre-determined clock cycles needed to cause a 100% toggle of the logic of crypto engine 415 (e.g., 100 clock cycles). Once the test run is completed, logic and/or features of control logic 310 such as signature feature 314 pulls the golden signature from signature register(s) 336 and compares the golden signature to MISR signature 421 that includes the values or data outputted by crypto engine 415 during the test run.

According to some examples, if the golden signature maintained in signature register(s) 336 matches MISR signature 421, then crypto engine 415 is considered as passing the test run. If the golden signature does not match MISR signature 421, then crypto engine 415 is considered as failing the test run. Pass/fail status of the test run, in some examples, may be maintained in pass/fail register(s) 334. Microcontroller 201 may read these registers following the test run to determine whether crypto engine 415 passed or failed the test run. If a test run fail is indicated in pass/fail register(s) 334, microcontroller 201 can disable crypto engine 415 or notify a user of system 100 that encryption associated with the I/O controller that uses crypto engine 415 is defective (this signaling could be integrated in the telemetry architecture of the SoC, for example). In other examples, control logic 310 can directly send an error message or high priority interrupt to microcontroller 201 to indicate that crypto engine 415 has failed the test run. The error message can include, but is not limited to, identifier information for the I/O die that includes the failed crypto engine, identifier information of what I/O partition includes the failed crypto engine, identifier information of what I/O controller uses the failed crypto engine, or identifier information of the crypto engine circuitry/crypto engine that failed the test run.

In some examples, following completion of the test run, Infield_Test_Mode_EN signal 401 is de-asserted by control logic 310. The de-assertion of Infield_Test_Mode_EN signal 401, for example, can serve as an indicator to microcontroller 201 to read pass/fail register(s) 334 to determine whether crypto engine 415 passed or failed the test run.

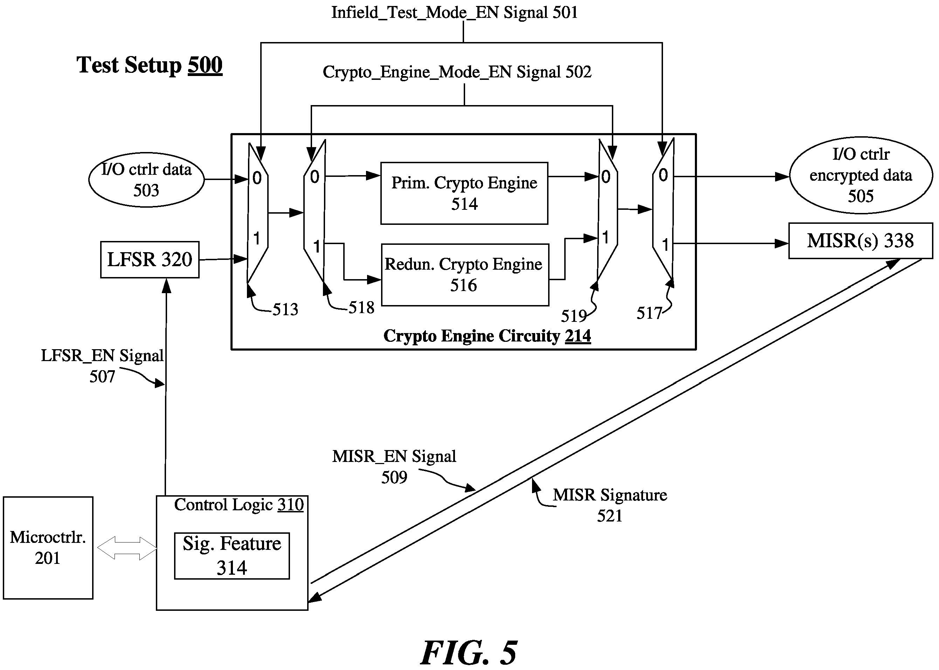

**FIG. 5** illustrates example test setup 500. According to some examples, as shown in FIG. 5, test setup 500 can include testing or scanning a primary crypto engine 514 and if needed, testing or scanning a secondary or redundant crypto engine 516. For these examples, similar to test setup 400, when Infield_Test_Mode_EN signal 501 to multiplexor 513 and demultiplexor 517 is not asserted, I/O controller data 503 is allowed to be inputted to a crypto engine and then to be outputted from the crypto engine as I/O controller encrypted data 505. Also, when Infield_Test_Mode _EN signal to multiplexor 513 and demultiplexor 517 is asserted, LFSR 320 is allowed to input a generated random pattern of data to the crypto engine, the pattern is encrypted by the crypto engine and then values/data is outputted to MISR(s) 338. Infield_Test_Mode_EN signal 501, for example, is not asserted during normal system operations of I/O partition 210.

According to some examples, as shown in FIG. 5, crypto engine circuitry 214 includes a second set of multiplexor/demultiplexor 518 and 519 that can be asserted to determine which crypto engine from among primary crypto engine 514 and redundant crypto engine 516 is to receive I/O controller data 503 during normal system operations and then output I/O controller encrypted data 505. For example, when Crypto_Engine_Mode_EN signal 502 is not asserted (indicated by 0 state), I/O controller data 503 is inputted to primary crypto engine 514 and I/O controller encrypted data 505 is outputted from primary crypt engine 514. Also, during normal system operations, when Crypto_Engine_Mode_EN signal 502 is asserted (indicated by 1 state), I/O controller data 503 is inputted to redundant crypto engine 516 and I/O controller encrypted data 505 is outputted from redundant crypto engine 516.

In some examples, test setup 500 may be used to first test or scan primary crypto engine 514 for defects in a similar manner as mentioned above for testing crypto engine 415. For these examples, Crypto_Engine_Mode_EN signal 502 is not asserted and microcontroller 201 can instruct control logic 310 to initiate an infield scan or test of primary crypto engine 514. Either microcontroller 201 or control logic 310 can cause Infield_Test_Mode_EN signal 501 to be asserted. Also, responsive to the instruction to initiate the infield scan, control logic 310 asserts LFSR_EN signal 507 to start LFSR 320 with an initial/seed value (e.g., pulled from LFSR Reg(s) 339) and also to assert MISR_EN signal 509 to cause MISR(s) 338 to store values or data outputted from primary crypto engine 514. The Infield_Test_Mode_EN signal 501 remains asserted for a test run that is based on a number of pre-determined clock cycles needed to cause a 100% toggle of the logic of primary crypto engine 514 (the test pattern can be constructed such that the number of clock is minimized, for performance reasons). Once the test run is completed, logic and/or features of control logic 310 such as signature feature 314 pulls the golden signature from signature register(s) 336 and compares the golden signature to MISR signature 521 that includes the values or data outputted by primary crypto engine 514 during the test run for primary crypto engine 514. If the golden signature matches MISR signature 521 for the test run for primary crypto engine 514, then primary crypto engine 514 is considered as passing the test run. In some examples, no further testing is needed based on primary crypto engine 514 passing the test run. Control logic 310 can then de-assert Infield_Test_Mode_EN signal 501 and maintain the non-assertion of Crypto_Engine_Mode_EN signal 502 to cause primary crypto engine 514 to be the crypto engine to receive I/O controller data 503 and output I/O controller encrypted data 505 during normal operation. A pass status of the test run by primary crypto engine 514, in some examples, may be maintained in pass/fail register(s) 334. In addition, a timeout detection logic could be implemented (not shown).

According to some examples, if the golden signature does not match MISR signature 521 for the test run on primary crypto engine 514, then primary crypto engine 514 is considered as failing this test run. For these examples, the fail status of this test run can be maintained in pass/fail register(s) 334. In response to the test failure of primary crypto engine 514, control logic 310 can record/indicate a fail status in pass/fail registers(s) 334 and also assert Crypto_Engine_Mode_EN signal 502. Assertion of Crypto_Engine_Mode_EN signal 502 can cause patterns generated by LFSR 320 to be input to redundant crypto engine 516 and values or data output by redundant crypto engine 516 is directed to MISR(s) 338 during this second test run. The Infield_Test_Mode_EN signal 501 remains asserted for a second test run that is based on a number of pre-determined clock cycles needed to cause a 100% toggle of the logic of redundant crypto engine 516 (e.g., same number of clock cycles as used for primary crypto engine 514). In some examples, prior to beginning the second test run, control logic 310 resets LFSR 320 to start with the initial/seed value mentioned above for the first test run for primary crypto engine 514. Once the second test run is completed, signature feature 314 pulls the golden signature from signature register(s) 336 and compares the golden signature to MISR signature 521 that includes the values or data outputted by redundant crypto engine 516 during this second test run. If the golden signature matches MISR signature 521 for this second test run, then redundant crypto engine 516 is considered as passing the infield test run. In some examples, responsive to redundant crypto engine 514 passing the test run, control logic 310 or microcontroller 201 de-asserts Infield_Test_Mode_EN signal 501 and maintains the assertion of Crypto_Engine_Mode_EN signal 502 to cause redundant crypto engine 516 to be the crypto engine to receive I/O controller data 503 and output I/O controller encrypted data 505 during normal operation. A pass status of the second test run by redundant crypto engine 516, in some examples, may be maintained in pass/fail register(s) 334. The de-assertion of Infield_Test_Mode_EN signal 501, for example, can serve as an indicator to microcontroller 201 to read pass/fail register(s) 334 to determine whether primary crypto engine 514 or redundant crypto engine 516 passed or failed infield test runes).

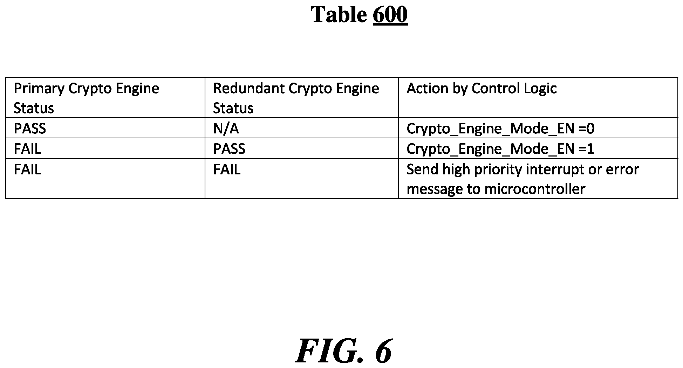

**FIG. 6** illustrates an example table 600 associated with test setup 500. According to some examples, table 600 as shown in FIG. 6 indicates actions to be taken by control logic (e.g., control logic 310) responsive to a primary crypto engine (e.g., primary crypto engine 514) passing or failing an infield test run as described above for test setup 500. For example, if the primary crypto engine passes the infield test run, then no test run is needed for a redundant crypto engine (e.g., redundant crypto engine 516) and then a Crypto_Engine_Mode_EN signal is de-asserted to cause the primary crypto engine to be used during normal operations. If the primary crypto engine fails the infield test run, then the redundant crypto engine is put through an infield test run and if the redundant crypto engine passes the infield test run, the control logic maintains assertion of the Crypto_Engine_Mode_EN signal to cause the redundant crypto engine to be used during normal operations. If both crypto engines fail infield tests, then the control logic can send a high priority interrupt or error message to a microcontroller (e.g., microcontroller 201) to indicate that both crypto engines have failed infield tests.

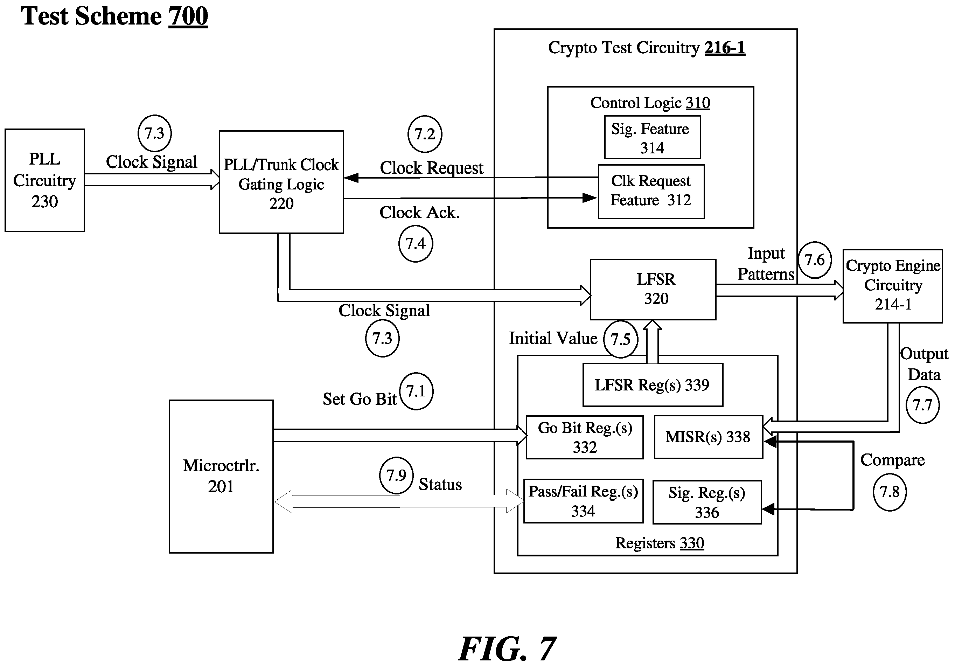

**FIG. 7** illustrates an example test scheme 700. In some examples, as shown in FIG. 7, at least portions of test scheme 700 can be implemented by microcontroller 201, crypto test circuitry 216-1, crypto engine circuitry 214-1, PLL/trunk clock gate logic 220, or PLL circuitry 230. For these examples, as shown in FIG. 2 and/or described above, these components can be resident on I/O die 104 and part of or included in an SoC or SoP such as system 100. Also, crypto test circuitry 216-1 can be included in I/O partition 210-1. Examples are not limited to these components that are resident on an I/O die such as I/O die 104.

Test scheme 700 can be implemented as an example of an opportunistic infield testing of a crypto engine included in crypto engine circuitry 214. The opportunistic aspect of infield testing can be based on periodic times at which the I/O partition can go into an inactive or idle power state due to no real time functional traffic or workload execution by the I/O partition. In such cases, as describe more below, crypto test circuitry 216-1 can opportunistically request for a clock signal to perform infield testing of the crypto engine included in crypto engine circuitry 214-1.

According to some examples, at 7.1, microcontroller 201 can identify that I/O partition 210-1 has entered an inactive or idle power state. For example, microcontroller 201 may monitor data traffic flow to or from I/O partition 210-1 to identify when I/O partition 210-1 enters an inactive or idle power state. In another example, microcontroller 201 can base identification of an inactive or idle power state based on heuristic information associated with how I/O partition 210-1 is used over different periods of time. For example, heuristic information can indicate that I/O partition 210-1 enters an inactive or idle power state during certain time periods of a 24-hour day due to reduced workload demand for workloads serviced by I/O devices coupled with or resident on I/O die 104. I/O partition 210-1 can be placed in an inactive or idle power state in a predicted or repetitive manner during these certain time periods. For these examples, based on identifying that I/O partition 210-1 has entered an inactive or idle power state, microcontroller 201 sets a go bit (e.g., to 1) included in go bit register(s) 332 maintained in registers 330 of crypto test circuitry 216-1.

In some examples, at 7.2, responsive to the setting of the go bit included in go bit register(s) 332, logic and/or features of control logic 310 such as clock request feature 312 can send a clock request to PLL/trunk clock gate logic 220. For these examples, while I/O partition 210-1 is in an inactive or idle power state, clock signal(s) can be gated or shut off for I/O partition 210-1. However, a clock signal is needed to conduct one or more infield test runs that cause, for example, LFSR 320 to generate patterns to be input to a crypto engine included in crypto engine circuitry 214-1 during a test run as mentioned above for test setups 400 and 500.

According to some examples, at 7.3, PLL/trunk clock gate logic 220 can be configured to cause a clock signal generated by a PLL included in PLL circuitry 230 to be ungated and provided to crypto test circuitry 216-1.

In some examples, at 7.4, PLL/trunk clock gate logic 220 sends a clock acknowledgement to indicate that a clock signal generated by the PLL included in PLL circuitry 230 is to be provided in response to the clock request placed by clock request feature 312.

According to some examples, at 7.5, control logic 310 can cause an initial/seed value to be obtained from LFSR register(s) 339 and loaded to LFSR 320.

According to some examples, at 7.6, control logic 310 can assert an Infield_Test_Mode_EN signal to initiate an infield scan or test of the one or more crypto engines included in crypto engine circuitry 214 using the clock generated by the PLL included in PLL circuitry 230 to drive patterns generated by LFSR 320 as inputs to a crypto engine during a test run in a similar manner as described above for test setups 400 and 500.

In some examples, at 7.7, Control logic 310 may also assert an MISR_EN signal to enable or cause MISR(s) 338 to receive and at least temporarily store output values or data from the crypto engine during the test run.

According to some examples, at 7.8, logic and/or features of control logic 310 such as signature feature 314, upon completion of the test run, can compare a golden signature included in signature register(s) 336 to the outputted values or data from the crypto engine that was at least temporarily stored to MISR(s) 338.

In some examples, at 7.9, logic and/or features of control logic 310 such as signature feature 314 can update pass/fail register(s) 334 to indicate a pass/fail status of the test run based on the comparison of the golden signature to the outputted values or data from the crypto engine that was at least temporarily stored to MISR(s) 338 (e.g., match = pass or no match = fail). For these examples, microcontroller 201 can then access pass/fail register(s) 334 to determine a status of the crypto engine. In some examples, microcontroller 201 can be configured to periodically read pass/fail register(s) 334. In other examples, control logic 310 can send an indication that a test run was completed and this prompts microcontroller 201 to read pass/fail register(s) 334 or microcontroller can automatically read pass/fail register(s) 334 when partition 210-1 exits an inactive or idle power state. Test scheme 700 can then come to an end.

According to some examples, testing or scanning of a crypto engine (e.g., crypto engine 415) included in crypto engine circuitry (e.g., crypto engine circuitry 214) of an I/O partition (e.g., I/O partition 210) included or resident on an I/O die (e.g. I/O die 104) included in a system (e.g., system 100) can be spread over multiple fault tolerant test intervals (FTTIs). FTTIs, for example, can range from 10 milliseconds (ms) to 100ms and are used to periodically scan at least portions of an SoC or SoP for defects or faults. An FTTI can be based on a level of tolerance for detecting/monitoring for faults/defects in an SoC or SoP. A lower level of tolerance, for example, would have an FTTI of around 10ms or less. Meanwhile, a higher level of tolerance would have an FTTI of around 100ms or more. Examples are not limited to FTTIs ranging from 10ms to 100ms, longer or shorter FTTIs are contemplated.

According to some examples, a test run for some types of crypto engines, for example, a test run for a crypto engine configured to execute AES-256 algorithms can require a certain number of clock cycles to completely toggle 100% of logic included in the crypto engine over a test run. For example, a test run for this type of crypto engine can require 112,448 clock cycles to complete a test run. If the clock used for this test run operates at 400 megahertz (approximate 2.5 nanoseconds/clock signal), then the test run would need approximately 280 microseconds (µs) to complete. A test run of 280µs would fit well within an FTTI budget of 10ms to 100ms, however there could be other types of infield testing of other SoC or SoP components/subsystems that need to be tested/scanned over an FTTI. A need can exist to spread crypto engine testing across multiple FTTIs.

In a first example, an LFSR (e.g., LFSR 320) and one or more MISRs (e.g., MISR(s) 338) of crypto test circuitry (e.g., crypto test circuitry 216) can be configured to run 2µs portions of a test run that takes a total of 280µs during each FTTI. Hence, for this first example, the test run can be spread across 140 different FTTIs. LFSR and MISR values to start a subsequent 2µs portion of the test run can be saved to registers of the crypto test circuitry (e.g., LRSR register(s) 339 and MISR register(s) 338). As a result, following a 2µs portion of the test run, a microcontroller (e.g., microcontroller 201) or control logic of the crypto test circuitry (e.g., control logic 310) can pause the LFSR and the MISR testing and later on resume testing using the saved LFSR and MISR values. This can occur for each 2µs portion until all 140 2µs portions are completed for the 280µs test run. Values or data stored to the MISR following the last 2µs portion is what is compared to a golden signature for determining pass/fail status. In a second example, the LFSR and one or more MISRs can be configured to run 20µs portions of the test run that takes a total of 280µs. Hence, for this second example, the test run can be spread across 14 FTTIs, which is a substantially smaller number of FTTIs compared to the first example. Similar to the first example, LFSR and MISR values to start a subsequent 20µs portion of the test run can be saved to registers of the crypto test circuitry. As a result, following a 20µs portion of the test run, the microcontroller or control logic of the crypto test circuitry can pause the LFSR and the MISR testing and later on resume testing using the saved LFSR and MISR values. This can occur for each 20qs portion until all 14 20µs portions are completed for the 280µs test run. Values or data stored to the MISR following the last 20µs portion is what is compared to a golden signature for determining pass/fail status.

A length of a portion of a test run, for example, can be based on market segment requirements that are dependent on how frequently a crypto engine is tested. Market segments that require a high level of data security (e.g., financial or banking market segments) would require a higher test frequency that would need longer test run portions to complete a test run over a fewer number of FTTIs (e.g., 14 rather than 140). Hence, for these higher security market segments, LFSRs and MISRs included in infield testing circuitry would be configured to complete a test run using longer test run portions (e.g., 20µs rather than 2µs).

According to some examples, a pass/fail status of a test run spread across multiple FTTIs according to either the first or second examples mentioned above, can be indicated in registers of the crypto test circuitry (e.g., pass/fail register(s) 334) and/or an indication may be sent to the microcontroller to indicate the pass/fail status of the tested/scanned crypto engine and the completion of each full test run.

Included herein is a logic flow representative of example methodologies for performing novel aspects of the disclosed techniques for a data-aware cache replacement. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware examples, a logic flow can be implemented by computer executable instructions stored on at least one non-transitory computer readable medium or machine readable medium, such as an optical, magnetic or semiconductor storage. The examples are not limited in this context.

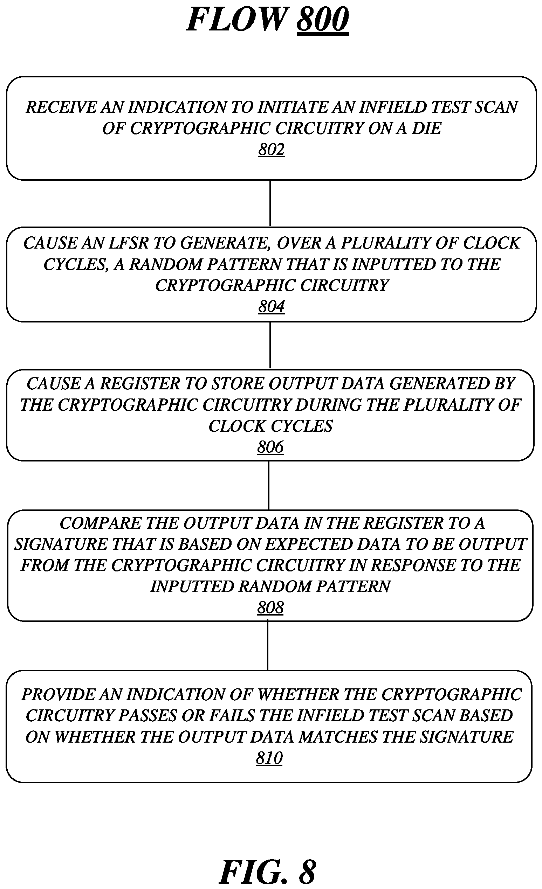

**FIG. 8** illustrates an example flow 800. According to some examples, flow 800 can be an example of actions taken by cryptographic test circuitry on a die included in a multi-die system such as crypto test circuitry 216 on I/O die 104 of system 100 as shown in FIGS. 2-7 and described above.

In some examples, as shown in FIG. 8, logic flow 800 at 802 can receive an indication to initiate an infield test scan of cryptographic circuitry on a die. For these examples, control logic 310 of crypto test circuitry 216 can receive the indication in response to microcontroller 201 asserting a bit in go bit register(s) 332 to indicate initiation of the infield test scan of crypto engine circuitry 214 located on I/O die 104,

According to some examples, logic flow 800 at 804 can cause an LFSR to generate, over a plurality of clock cycles, a random pattern that is inputted to the cryptographic circuitry. For these examples, control logic 310 can cause LFSR 320 of crypto test circuitry 216 to generate the random pattern to be inputted to crypto engine circuitry 214 (e.g., to crypto engine 415).

In some examples, logic flow 800 at 806 can cause a register to store output data generated by the cryptographic circuitry during the plurality of clock cycles. For these examples, control logic 310 can cause MISR(s) 338 to store output data generated by crypto engine circuitry 214 during the plurality of clock cycles. The plurality of clock cycles, for example, may be incorporated in a test run.

According to some examples, logic flow 800 at 808 can compare the output data in the register to a signature that is based on expected data to be output from the cryptographic circuitry in response to the inputted random pattern. For these examples, logic and/or features of control logic 310 such as signature feature 314 may compare a signature included in signature register(s) 336 to the output data stored to MISR(s) 338.

In some examples, logic flow 800 at 810 can provide an indication of whether the cryptographic circuitry passes or fails the infield test scan based on whether the output data matches the signature. For these examples, control logic 310 can include information in pass/fail register(s) 334 to indicate whether crypto engine circuitry 214 has passed or failed the infield test scan. Microcontroller 201 can be configured to access pass/fail register(s) 334 to determine the pass/fail status of crypto engine circuitry 214. Alternatively, control logic 310 may send a message or interrupt to microcontroller 201 to indicate whether crypto engine circuitry 214 has passed or failed the infield test scan.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, or A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The following examples pertain to additional examples of technologies disclosed herein.

Example 1. An example apparatus can include an LFSR, a register configured to store data generated by cryptographic circuitry on a die and control logic. The control logic can be configured, based on a start indicator, to cause the LFSR to generate, over a plurality of clock cycles, a random pattern that is to be inputted to the cryptographic circuitry. The control logic can also be configured to provide to the register output data generated by the cryptographic circuitry during the plurality of clock cycles. The control logic can also be configured to compare the output data in the register to a signature that is based on expected data to be output from the cryptographic circuitry in response to the inputted random pattern. The control logic can also be configured to provide an indication of whether the cryptographic circuitry passes or fails an infield test scan based on whether the output data matches the signature.

Example 2. The apparatus of example 1, the LFSR can generate the random pattern based on the control logic providing a seed value to initiate the random pattern. The signature can be determined based on the seed value, a configuration of the LFSR, a configuration of the cryptographic circuitry, and a number of clock cycles for the plurality of clock cycles.

Example 3. The apparatus of example 2, the configuration of the cryptographic circuitry can be based on a cryptographic algorithm to be used by the cryptographic circuitry, the cryptographic algorithm to include an AES-128 algorithm, an AES-256 algorithm, a SHA-384 algorithm or a SHA-512 algorithm.

Example 4. The apparatus of example 1, the start indicator can be received from a microcontroller of the die. The apparatus can also include a second register. For this examples, the microcontroller can assert a bit in the second register to provide the start indicator.

Example 5. The apparatus of example 1 can also include a second register. For this example, the control logic can be configured to store information to indicate whether the cryptographic circuitry passes or fails the infield test scan in the second register. Also, a microcontroller of the die can be configured to access the second register for the control logic to provide the indication of whether the cryptographic circuitry passes or fails the infield test scan.

Example 6. The apparatus of example 1, to provide the indication of whether the cryptographic circuitry passes or fails the infield test scan includes the control logic to provide the indication via a message or interrupt to be sent to a microcontroller of the die.

Example 7. The apparatus of example 1, the register can be an MISR.

Example 8. The apparatus of example 1, the start indicator can be based on at least a portion of the die, that includes at least the apparatus, entering an idle power state. For this example, the control logic can be further configured to send a request to receive a clock signal from a PLL and responsive to receipt of a grant to receive the clock signal, cause the LFSR to generate, over the plurality of clock cycles, the random pattern using the clock signal.

Example 9. The apparatus of example 1, the plurality of clock cycles can be a test run. The test run can be spread across multiple FTTIs. The output data can be provided to the register following a last FTTI of the multiple FTTIs and can be compared to the signature.

Example 10. The apparatus of example 1, the die can be included in a multi-die system to be configured as a processor.

Example 11. An example method can include receiving an indication to initiate an infield test scan of cryptographic circuitry on a die. The method can also include causing an LFSR to generate, over a plurality of clock cycles, a random pattern that is inputted to the cryptographic circuitry. The method can also include causing a register to store output data generated by the cryptographic circuitry during the plurality of clock cycles. The method can also include comparing the output data in the register to a signature that is based on expected data to be output from the cryptographic circuitry in response to the inputted random pattern. The method can also include providing an indication of whether the cryptographic circuitry passes or fails the infield test scan based on whether the output data matches the signature.

Example 12. The method of example 11, providing a seed value to the LFSR can cause the LFSR to generate the random pattern. For this example, the signature is to be determined based on the seed value, a configuration of the LFSR, a configuration of the cryptographic circuitry, and a number of clock cycles for the plurality of clock cycles.

Example 13. The method of example 12, the configuration of the cryptographic circuitry can include the configuration based on a cryptographic algorithm to be used by the cryptographic circuitry. The cryptographic algorithm can include an AES-128 algorithm, an AES-256 algorithm, a SHA-384 algorithm or a SHA-512 algorithm.

Example 14. The method of example 11, the indication to initiate the infield test scan can be received from a microcontroller of the die that asserts a bit in a second register to indicate initiation of the infield test scan.

Example 15. The method of example 11 can also include storing information to indicate whether the cryptographic circuitry passes or fails the infield test scan in a second register. For this example, a microcontroller of the die can be configured to access the second register in order to be provided the indication of whether the cryptographic circuitry passes or fails the infield test scan.

Example 16. The method of example 11, providing the indication of whether the cryptographic circuitry passes or fails the infield test scan can include providing the indication to a microcontroller of the die via a message or interrupt that is sent to the microcontroller.

Example 17. The method of example 11, the register can be an MISR.

Example 18. The method of example 11, receiving the indication to initiate the infield test scan can be based on at least a portion of the die entering an idle power state. The method may also include sending a request to receive a clock signal from a PLL and responsive to receipt of a grant to receive the clock signal, causing the LFSR to generate, over the plurality of clock cycles, the random pattern using the clock signal.

Example 19. The method of example 11, the plurality of clock cycles can be a test run. For this example, the test run can be spread across multiple FTTIs. Also, the output data can be stored to the register following a last FTTI of the multiple FTTIs is to be compared to the signature.

Example 20. The method of example 11, the die can be included in a multi-die system to be configured as a processor.

Example 21. An example at least one machine readable medium can include a plurality of instructions that in response to being executed by a system causes the system to carry out a method according to any one of examples 11 to 20.

Example 22. An example apparatus can include means for performing the methods of any one of examples 11 to 20.

Example 23. An example system can include cryptographic circuitry on a die and cryptographic test circuitry. The cryptographic test circuitry can be configured to, based on a start indicator, cause an LFSR to generate, over a plurality of clock cycles, a random pattern that is inputted to the cryptographic circuitry. The cryptographic test circuitry can also be configured to provide, to a register, output data generated by the cryptographic circuitry during the plurality of clock cycles. The cryptographic test circuitry can be configured to compare the output data in the register to a signature that is based on expected data to be output from the cryptographic circuitry in response to the inputted random pattern. The cryptographic test circuitry can be configured to provide an indication of whether the cryptographic circuitry passes or fails an infield test scan based on whether the output data matches the signature.

Example 24. The system of example 23, the cryptographic test circuitry can also be configured to provide a seed value to the LFSR to cause the LFSR to generate the random pattern. The signature can be determined based on the seed value, a configuration of the LFSR, a configuration of the cryptographic circuitry, and a number of clock cycles for the plurality of clock cycles.

Example 25. The system of example 24, the configuration of the cryptographic circuitry can include the configuration based on a cryptographic algorithm to be used by the cryptographic circuitry. The cryptographic algorithm can include an AES-128 algorithm, an AES-256 algorithm, a SHA-384 algorithm or a SHA-512 algorithm.

Example 26. The system of example 23, the start indicator can be received from a microcontroller of the die via assertion a bit in a second register. The bit can indicate initiation of the infield test scan by the cryptographic test circuitry.

Example 27. The system of example 23, the cryptographic test circuitry can also be configured to store information to indicate whether the cryptographic circuitry passes or fails the infield test scan in a second register. A microcontroller of the die can be configured to access the second register in order to be provided the indication of whether the cryptographic circuitry passes or fails the infield test scan.

Example 28. The system of example 23, wherein the cryptographic test circuitry can provide the indication to a microcontroller of the die of whether the cryptographic circuitry passes or fails the infield test scan via a message or interrupt that is sent to the microcontroller.

Example 29. The system of example 23, wherein the register comprises an MISR included in the cryptographic test circuitry.

Example 30. The system of example 23, the start indicator can be based on at least a portion of the die entering an idle power state. The cryptographic test circuitry can also be configured to send a request to receive a clock signal from a PLL. The cryptographic test circuitry can also be configured to, responsive to receipt of a grant to receive the clock signal, cause the LFSR to generate, over the plurality of clock cycles, the random pattern using the clock signal.

Example 31. The system of example 23, the plurality of clock cycles can be a test run. The test run can be spread across multiple FTTIs. The output data provided to the register by the cryptographic test circuitry following a last FTTI of the multiple FTTIs can be compared to the signature.

Example 32. The system of example 23, the die can be included in a multi-die system to be configured as a processor.

Example 33. The system of example 23, the cryptographic circuitry can be configured to include a primary cryptographic engine and a redundant cryptographic engine. For this example, the cryptographic test circuitry can also be configured to cause the LFSR to generate, over a test run during the plurality of clock cycles, the random pattern. The cryptographic test circuitry can also be configured to cause the random pattern to be inputted to the primary cryptographic engine during the test run. The cryptographic test circuitry can also be configured to provide to the register first data generated by the primary cryptographic engine during the test run. The cryptographic test circuitry can be configured to compare the first output data in the register to the signature, wherein the indication of whether the cryptographic circuitry passes or fails the infield test scan is to indicate that the cryptographic circuitry passes the infield test scan based on the first output data matching the signature.

Example 34. The system of example 23, the cryptographic circuitry can be configured to include a primary cryptographic engine and a redundant cryptographic engine. For this example, the cryptographic test circuitry can also be configured to cause the LFSR to generate, over a first test run during a first portion of the plurality of clock cycles, the random pattern. The cryptographic test circuitry can also be configured to cause the random pattern to be inputted to the primary cryptographic engine during the first test run.. The cryptographic test circuitry can also be configured to provide to the register first output data generated by the primary cryptographic engine during the first test run. The cryptographic test circuitry can also be configured to compare the first output data in the register to the signature to determine that the first output data does not match the signature. The cryptographic test circuitry can also be configured to cause the LFSR to generate over a second test run during a second portion of the plurality of clock cycles, the random pattern. The cryptographic test circuitry can also be configured to cause the random pattern to be inputted to the redundant cryptographic engine during the second test run. The cryptographic test circuitry can also be configured to provide to the register second output data generated by the redundant cryptographic engine during the second test run. The cryptographic test circuitry can also be configured to compare the second output data in the register to the signature, wherein the indication of whether the cryptographic circuitry passes or fails the infield test scan is to indicate that the cryptographic circuitry passes the infield test scan based on the second output data matching the signature.

Example 35. The system of example 23, the cryptographic circuitry can also be configured to include a primary cryptographic engine and a redundant cryptographic engine. For this example, the cryptographic test circuitry may also be configured to cause the LFSR to generate, over a first test run during a first portion of the plurality of clock cycles, the random pattern. The cryptographic test circuitry can also be configured to cause the random pattern to be inputted to the primary cryptographic engine during the first test run. The cryptographic test circuitry can also be configured to provide to the register first output data generated by the primary cryptographic engine during the first test run. The cryptographic test circuitry can also be configured to compare the first output data in the register to the signature to determine that the first output data does not match the signature. The cryptographic test circuitry can also be configured to cause the LFSR to generate over a second test run during a second portion of the plurality of clock cycles, the random pattern. The cryptographic test circuitry can also be configured to cause the random pattern to be inputted to the redundant cryptographic engine during the second test run. The cryptographic test circuitry can also be configured to provide to the register second output data generated by the redundant cryptographic engine during the second test run. The cryptographic test circuitry can also be configured to compare the second output data in the register to the signature, wherein the indication of whether the cryptographic circuitry passes or fails the infield test scan is to indicate that the cryptographic circuitry fails the infield test scan based on the first and second output data not matching the signature.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An apparatus comprising:
an linear-feedback shift register (LFSR);
a register configured to store data generated by cryptographic circuitry on a die; and
control logic configured to:
based on a start indicator, cause the LFSR to generate, over a plurality of clock cycles, a random pattern that is to be inputted to the cryptographic circuitry;
provide, to the register, output data generated by the cryptographic circuitry during the plurality of clock cycles;
compare the output data in the register to a signature that is based on expected data to be output from the cryptographic circuitry in response to the inputted random pattern; and
provide an indication of whether the cryptographic circuitry passes or fails an infield test scan based on whether the output data matches the signature.

2. The apparatus of claim 1, comprising the LFSR to generate the random pattern based on the control logic providing a seed value to initiate the random pattern, wherein the signature is to be determined based on
the seed value,
a configuration of the LFSR,
a configuration of the cryptographic circuitry, and
a number of clock cycles for the plurality of clock cycles.

3. The apparatus of claim 2, wherein the configuration of the cryptographic circuitry comprises the configuration based on a cryptographic algorithm to be used by the cryptographic circuitry, the cryptographic algorithm to include an AES-128 algorithm, an AES-256 algorithm, a SHA-384 algorithm or a SHA-512 algorithm.

4. The apparatus of claim 1, wherein the start indicator is received from a microcontroller of the die, the apparatus to further comprise:
a second register, wherein the microcontroller is to assert a bit in the second register to provide the start indicator.

5. The apparatus of claim 1, further comprising:
a second register,
wherein the control logic is configured to store information to indicate whether the cryptographic circuitry passes or fails the infield test scan in the second register, a microcontroller of the die configured to access the second register for the control logic to provide the indication of whether the cryptographic circuitry passes or fails the infield test scan.

6. The apparatus of claim 1, wherein to provide the indication of whether the cryptographic circuitry passes or fails the infield test scan comprises the control logic to provide the indication via a message or interrupt to be sent to a microcontroller of the die.

7. The apparatus of claim 1, wherein the register comprises a multiple input signature register (MISR).

8. The apparatus of claim 1, wherein the start indicator is to be based on at least a portion of the die that includes at least the apparatus, has entered an idle power state, wherein the control logic is further configured to:
send a request to receive a clock signal from a phase-locked loop (PLL); and
responsive to receipt of a grant to receive the clock signal, cause the LFSR to generate, over the plurality of clock cycles, the random pattern using the clock signal.

9. The apparatus of claim 1, the plurality of clock cycles comprises a test run, wherein the test run is to be spread across multiple fault tolerant test intervals (FTTIs), and wherein the output data provided to the register following a last FTTI of the multiple FTTIs is to be compared to the signature.

10. The apparatus of claim 1, wherein the die is included in a multi-die system to be configured as a processor.

11. A method comprising:
receiving an indication to initiate an infield test scan of cryptographic circuitry on a die;
causing a linear-feedback shift register (LFSR) to generate, over a plurality of clock cycles, a random pattern that is inputted to the cryptographic circuitry;
causing a register to store output data generated by the cryptographic circuitry during the plurality of clock cycles;
comparing the output data in the register to a signature that is based on expected data to be output from the cryptographic circuitry in response to the inputted random pattern; and
providing an indication of whether the cryptographic circuitry passes or fails the infield test scan based on whether the output data matches the signature.

12. The method of claim 11, further comprising:
providing a seed value to the LFSR to cause the LFSR to generate the random pattern, wherein the signature is to be determined based on
the seed value,
a configuration of the LFSR,
a configuration of the cryptographic circuitry, and
a number of clock cycles for the plurality of clock cycles.

13. The method of claim 12, wherein the configuration of the cryptographic circuitry comprises the configuration based on a cryptographic algorithm to be used by the cryptographic circuitry, the cryptographic algorithm to include an AES-128 algorithm, an AES-256 algorithm, a SHA-384 algorithm or a SHA-512 algorithm.

14. At least one machine readable medium comprising a plurality of instructions that in response to being executed by a system causes the system to carry out a method according to any one of claims 11 to 13.

15. An apparatus comprising means for performing the methods of any one of claims 11 to 13.
